# EUROPEAN PATENT APPLICATION

(11) **EP 1 232 688 A2**
(43) Date of publication of application: **21.08.2002**
(21) Application number: 01304437.5
(22) Date of filing: 18.05.2001
(51) Int. Cl.: A01K 1/035

(54) **Pet housing pad with bolsters**

(30) Priority: 14.02.2001 US 783230
(71) Applicant: Flexi-Mat Corporation, Chicago, IL 60608 (US)
(72) Inventor: Kostial, Maureen, Minnertonka, MN 55345 (US)
(74) Representative: Spall, Christopher John

(57) **Abstract**

A pad for use in animal pet housings has bolsters hingedly connected along at least one edge of a center cushion so that the pad may conform to pet housings of similar shape but different floor dimensions. This allows one pet housing pad to accommodate pet housings of similar shapes but different dimensions, and the bolsters provide comfort and warmth to the pet along a vertical surface of the pet housing. The cushion covers are made of a washable, durable fabric. Contained within the cushion covers is soft foam, polyester or other similar material, which may be treated with an odor retardant such as cedar. The cushion cover may have a reclosable access opening defined by overlapping flaps of fabric, a zipper or other closure mechanism.

## Description

### FIELD OF THE INVENTION

The present invention relates generally to pet housings and, in particular, to a pad for use in pet housings in which the pad has one or more bolsters flexibly attached to a center cushion.

### BACKGROUND OF THE INVENTION

Pads are used in pet housings to provide a resting surface for an animal contained therein. Pet housing, as that term is used herein, includes crates, cages, carriers and dog houses. Typically, pet housing has a bottom made of plastic, wood or metal, and the walls may be either solid or formed from mesh or bars. In any case, a pet housing pad provides more comfort and protection for the animal from the pet housing bottom. Pet housing pads also may provide an absorbent surface should the animal not use an appropriate alternative location for excretory relief, and pet housing pads provide thermal insulation against the bottom of the pet housing should the pet housing be in an inclement clime.

Pet owners will often have one type and size of pet housing for restraining the animal in the home and another type and size of pet housing for transporting the animal. Because animals are generally more comfortable when confined in a larger space, owners may use a large pet housing for keeping the animal confined in the home and a small pet housing for animal transport.

Typically, pet housing pads are sized to fit a particular pet housing. Therefore, owners who have more than one pet housing will typically have a pet housing pad for each such pet housing. Similarly, pet housing merchants stock pet housing pads for each size of pet housing.

Accordingly, for a pet owner who owns more than one form of pet housing, the owner is required to purchase pads to fit each size needed. A merchant is required to carry alarge number of pads to fit all sizes of pet housing. The merchant, thus, must provide in-store linear display footage and consume inventory space for each pet housing pad size. The merchant must also create separate SKU tracking numbers and expend resources to track each pet housing pad size to determine current inventory, pricing and likely future demand. Were a merchant not to have a particular size of pet housing pad, the next closest size would not fit and the merchant would be unable to profit in that case from investment in inventory and display space.

Furthermore, standard crate pads provide a covering for only the bottom of the pet housing. Pets, however, often prefer to rest against a wall or other vertical surface, possibly for warmth or perhaps for an instinctive feeling of security. Pet housings with typical pads provide no comfortable vertical surface for such purposes, and the pet must rest against the bars or solid or mesh walls of the pet housing.

Accordingly, need arises for a pet housing pad that may be used to fit multiple-sized pet housings. Such a pad would allow owners of multiple-sized pet housings to use one pad only. Merchants would be able to stock fewer pads to satisfy demand for more and differently-sized pet housings while simultaneously reducing their tracking, inventory and display costs. Further the pet housing pad should be relatively inexpensive to manufacture and easy to clean. Such a pet housing pad would also provide some comfort and warmth along a vertical surface of the pet housing.

### SUMMARY OF THE INVENTION

The present invention satisfies these needs. The present invention provides a pet housing pad having at least one bolster flexibly attached thereto. A single bolster may be attached along an edge of a center cushion. Alternatively, several bolsters may be attached to several center cushion edges to fit an appropriate pet housing.

In one form, the pet housing pad with bolsters may be made of washable fabric that forms an inside pocket area that can be filled with foam, polyester, cedar chips or other filling material.

Such a pet housing pad may be used in a pet housing where the pad and bolsters lie flat and cover only the floor of the pet housing, forming an extended pad. The same pad may also be used in a pet housing having smaller floor dimensions than the extended pad such that any one or more bolsters are folded vertically against the inside wall of the pet housing, thereby creating a soft surface against which an animal may rest for security or comfort.

Further objects, features and advantages of the present invention will become apparent from the following description and drawings.

### BRIEF DESCRIPTION OF THE DRAWINGS

FIG. 1 is a perspective view of the present invention, wherein the bolsters are lying flat;
FIG. 2 is a top plan view of the invention with the bolsters lying flat;
FIG. 3 is a bottom plan view of the invention with the bolsters lying flat.
FIG. 4 is top plan view of the invention with the bolsters folded up;
FIG. 5 is a perspective view of the invention inside a pet pet housing with the bolsters folded up;
FIG. 6 is a front view of the invention inside a pet pet housing with the bolsters folded up;
FIG. 7 is a perspective view of a bolster covering at an early step in the assembly of the invention;
FIG. 8 is a perspective view of the cushion coverings at an early step in the assembly of the invention;
FIG. 9 is a perspective view of the cushion coverings and a bolster covering during an early step in the assembly of the invention;
FIG. 10 is a cross-sectional view of a bolster covering and cushion coverings at an early step in the assembly of the invention;
FIG. 11 is a cross-sectional view of a bolster covering and cushion coverings at a later step in the assembly of the invention.

### DETAILED DESCRIPTION OF THE INVENTION

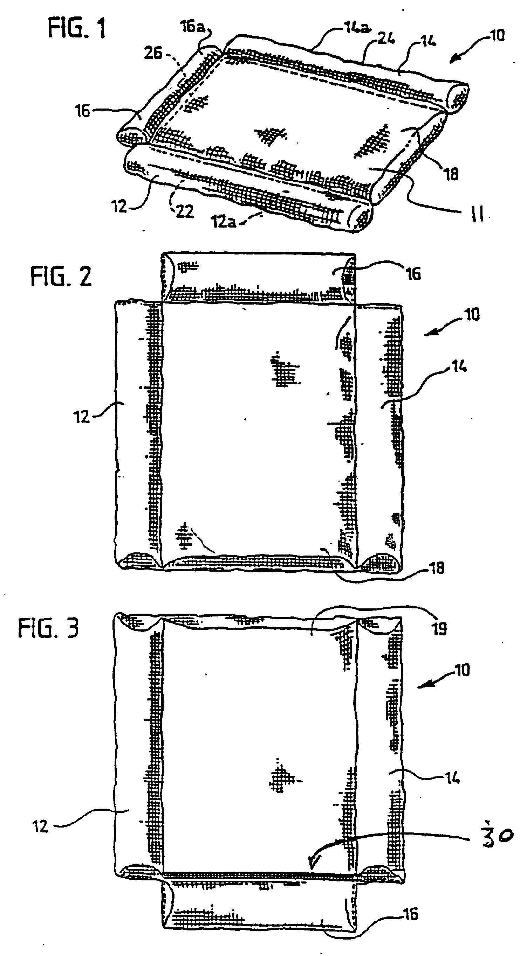

In accordance with a preferred embodiment of the present invention, a pet housing pad with bolsters is described that provides distinct advantages when compared to those of the prior art. The invention can best be understood with reference to accompanying drawing FIGS. 1 through 11.

The pet housing pad 10 of the present invention includes a center cushion 11, two side bolsters 12, 14 and an end bolster 16. Center cushion 11 is made of top covering 18 and a bottom covering 19 having area dimensions that conform to the area dimensions of the floor of pet housings in which the pet housing pad 10 will be used. In the preferred embodiment, the pet housing pad 10 is rectangular in shape. However, it will be appreciated that the present invention could be made in a variety of shapes and sizes, such as a circular pet housing pad having a single circular bolster around the edge to allow use in circular-shaped pet housings of different sizes. It will also be appreciated that the present invention provides for a multisided pet housing pad with bolsters along one or more sides to allow placement of the same pet housing pad in appropriately-shaped pet housings of different sizes.

The side bolsters 12, 14 and end bolster 16 include side bolster coverings 12a, 14a and end bolster covering 16a, respectively, and each is hingedly attached to cushion coverings 18, 19. The coverings 18, 19, side bolster coverings 12a, 14a and end bolster covering 16a are, preferably, composed of an easily-cleaned and durable fabric material. The material may have colors and designs, or lack thereof, as consumer preference may dictate.

In the preferred embodiment, the side bolster coverings 12a, 14a and end bolster covering 16a are filled with bolster filling 22, 24, 26, such as blown polyester. The center cushion coverings 18, 19 contain mat 28 between them. The mat 28 may be fabricated from any soft, durable and resilient material, such as foam, but is preferably easy to replace as it becomes soiled or worn.

As an example of specific measurements for the component fabric pieces, a pet housing pad in accordance with the preferred embodiment of the present invention shown in FIGS. 1 through 6 may be assembled from the following component parts: two fabric pieces measuring approximately 12" (inches) by approximately 25 inches to form side bolster coverings 12a, 14a; a single fabric piece measuring approximately 18 inches by approximately 12 inches to form an end bolster covering 16a; and two fabric pieces each measuring approximately 25 inches by approximately 18 inches to form top and bottom coverings 18, 19. Given these fabric measurements, a mat 28 measuring approximately 1 inch thick by approximately 15 inches wide by approximately 22 inches long may be inserted through the zippered opening. A pet housing pad according to the measurements described above could be used in pet housings ranging in size from approximately 19" x 28"up to 27" x 32". Other dimensions could also be used for the various components of the invention to accommodate other pet housing sizes.

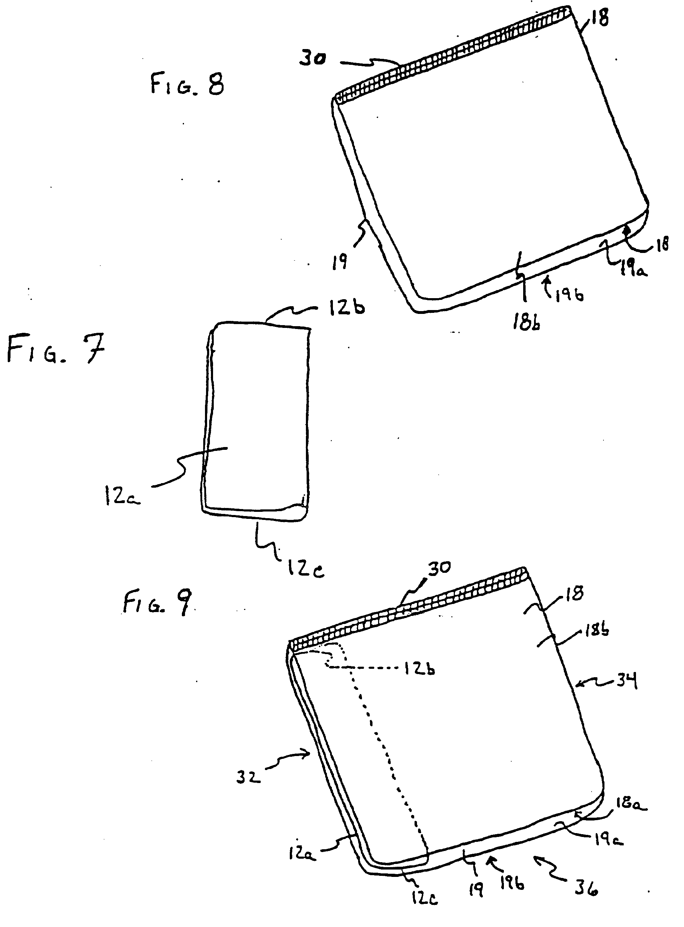

Assembly of the preferred embodiment begins with side bolster coverings 12a, 14a and end bolster covering 16a folded lengthwise, wrong side out (i.e., with any fabric pattern or the preferred external surface facing inwardly) as shown in FIG. 7. One end 12b of bolster covering 12a is sewn shut while the other end 12c of bolster covering 12a is left unsewn. In similar manner, the other bolster coverings 14a, 16a are turned inside out and one end of each is sewn. The bolster coverings 12a, 14a, 16a are then turned inside out so the coverings 12a, 14a, 16a are right side out (i.e. with any fabric pattern or the preferred external surface facing outward), and the stitching is concealed on the inside of the coverings 12a, 14a, 16a.

Next, a zipper 30 is preferably attached to both cushion coverings 18, 19 along one end of each cushion covering 18, 19. The zipper 30 permits the mat to be removed for cleaning or replacement as desired. The cushion coverings 18, 19 are then turned inside out so that the preferred external surface 18a of cushion covering 18 is facing the preferred external surface 19a of cushion covering 19, and the preferred internal covering surfaces 18b, 19b are both facing outward as shown in FIG. 8.

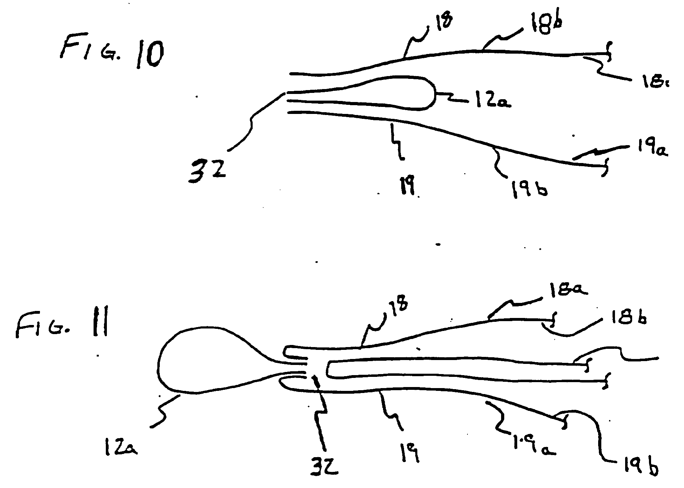

Side bolster covering 12a is then positioned so that it is disposed between and adjacent the preferred external surfaces 18a, 19a of cushion coverings 18, 19 as shown in FIGS. 9 and 10. Care is taken to align the cushion coverings 18, 19 and bolster covering 12a so that the closed end 12b of bolster covering 12a is parallel with the end of the cushion coverings 18, 19 having the zipper 30. In this inside out configuration, the cushion coverings 18, 19 and side bolster covering 12a are sewn together along common edge 32, thus providing a hingedly-flexible connection between the center cushion 11 and bolster 12.

This assembly procedure will allow most of the seams to be concealed inside of the coverings once the assembled pet housing pad is turned right side out. These hingedly-flexible connections operate independently of each other so that, for example, end bolster 16 could flex while side bolsters 12, 14 would not flex, or vice versa.

In a manner similar to the insertion of bolster covering 12a, bolster covering 14a is inserted between cushion coverings 18, 19. The previously sewn end of bolster covering 14a is parallel with the zipper 30. In a manner similar to the sewing of common edge 32, the common edge 34 of bolster covering 14a and cushion coverings 18, 19 is sewn.

Again, following the construction method like that used with side bolster coverings 12a, 14a, the end bolster covering 16a is inserted inside the coverings 18, 19. End bolster covering 16a is parallel with common edge 36, and common edge 36 is then sewn.

Next, the coverings 18, 19, end bolster covering 16a and side bolster coverings 12a, 14a are turned right side out through the opening of zipper 30. As shown in FIG. 11, common edge 32 is contained within cushion coverings 18, 19 and adjacent the preferred inner surfaces 18b, 19b of cushion coverings 18, 19.

In this manner, the stitching that closes common edges 32, 34, 36 is concealed along the inner surfaces 18b, 19b of cushion coverings 18, 19. By positioning sewn seams inside the bolsters and cushion, the inventive pad 10 presents an aesthetically pleasing appearance and also avoids direct contact between the pet and a sewn seam, thus preventing possible degradation to seam strength through contact with the pet or the pet housing.

Bolster filling 22, 24, 26, such as polyester fiber, is blown into side bolster coverings 12a, 14a and end bolster covering 16a, and the open ends of the bolster coverings 12a, 14a, 16a are then sewn closed. A bonded polyester fill or foam mat 28 (Fig. 11) is inserted through zipper 30 into the space between coverings 18, 19 and the zipper 30 is closed. Physical assembly of the inventive pad 10 is complete.

While blown polyester is preferred for its inertness, softness and minimal cost, other materials can be used in place of bolster filling 22, 24, 26, such as foam pieces, styrofoam beads, PVC beads, a mixture of polyester and cotton or other suitable material, any of which may be treated with an odor retarding agent such as cedar.

Further, instead of a zipper 30, access to the interior of the cushion coverings 18, 19 may be controlled by a slit (not shown) in the fabric of cushion covering 19. The slit could be concealed by overlapping flaps of the fabric of cushion covering 19. The flaps could then be manually parted to remove the mat 28, but replaced in an overlapping condition to close the slit opening. Alternatively, other closure mechanisms are possible, including buttons, snaps, and hook and loop closure systems.

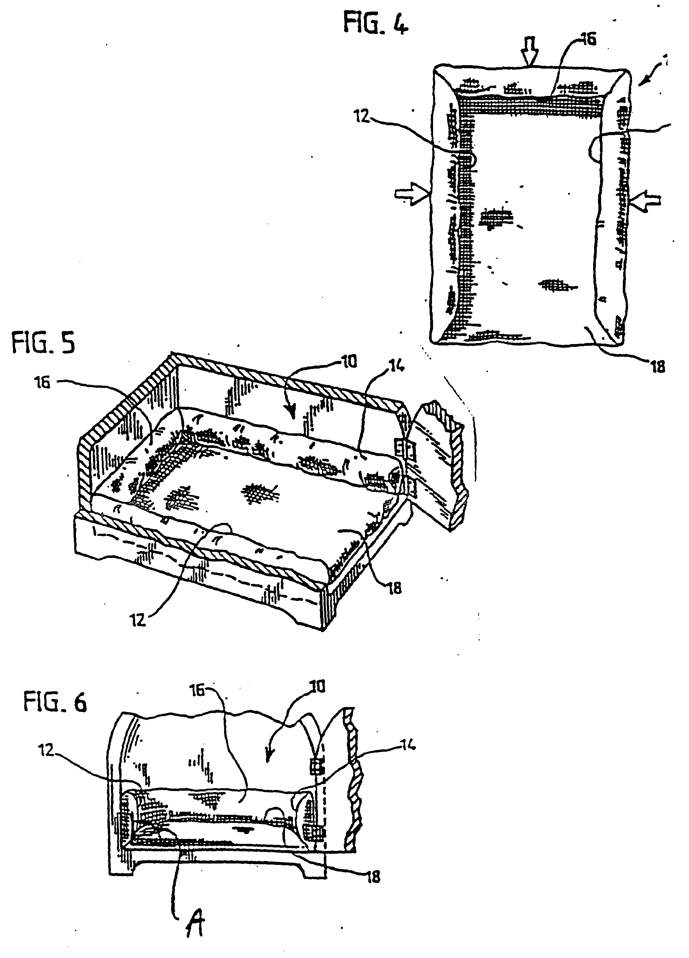

When the inventive pet housing pad 10 is inserted into the pet housing, the center cushion 11 lies flat along the floor of the pet housing and may substantially cover all of the floor as shown in FIG. 5. The bolsters 12, 14, 16 may be flat on the floor of the pet housing (in the case of a large pet housing) in a configuration consistent with FIGS. 1-3. Alternatively, the bolsters 12, 14, 16 may be propped upright against the walls of the pet housing at an angle A relative to the horizontal center cushion as shown in FIGS. 5 and 6 where angle A is between 0° and 90°, depending upon the floor dimensions of the pet housing. Because the bolsters 12, 14, 16 are hingedly attached to the center cushion 11, the bolsters 12, 14, 16 easily conform to the area dimensions of the floor of the pet housing by folding upward along the walls of the pet housing at the seams between the bolsters and the center cushion. The bolsters 12, 14, 16 thereby provide a warm and comfortable resting surface for the pet along the vertical or wall surfaces of the pet housing. The inventive pet housing pad 10 also accommodates pet housings of different sizes because the bolsters 12, 14, 16 flex according to the floor dimensions of each pet housing.

Those skilled in the art, having carefully read the detailed description of the preferred embodiment, will appreciate that many modifications and substitutions can be made to the preferred embodiment without departing from the spirit and scope of the invention. For example, one or both side bolsters 12, 14 or the end bolster may be excluded from construction. The side bolsters could be omitted, for example, for pet housing having two entrances where it would be undesirable to have a bolster blocking one or both entrances.

Further, the center cushion and any hingedly-attached bolster may be integrally formed of material, such as foam. In such manner, a large section of foam may form the mat of the center cushion and have hingedly attached thereto one or more foam bolsters in accordance with the present invention.

Moreover, the present invention is not limited to the specific example provided above but, rather, is defined by the appended claims. Those of ordinary skill in the art will appreciate that the foregoing description is by way of example only and is not intended to be limiting of the invention as described in such appended claims.

## Claims

1. A pad for pet housings comprising:
a center cushion;
at least one bolster flexibly attached to said center cushion.

2. The pad of claim 1 wherein said center cushion includes:
a center cushion covering and a removable mat within the center cushion covering.

3. The pad of claim 2 wherein the center cushion further includes a reclosable access opening.

4. The pad of claim 3 wherein the center cushion further includes a zipper to control the reclosable access opening.

5. A pad for pet housings comprising:
a center cushion covering;
a removable mat disposed within the center cushion covering;
a first side bolster flexibly attached to said center pad covering;
a second side bolster flexibly attached to said center pad covering; and
an end bolster flexibly attached to said center pad covering.

6. The pad of claim 5 wherein the center cushion covering further includes a reclosable access opening.

7. The pad of claim 6 wherein the center cushion covering further includes a zipper to control said reclosable access opening.

8. The pad of claim 5 wherein each of said bolsters flex independently of the other bolsters.

9. A pad for pet housings comprising:
a center cushion covering;
a removable mat disposed within the center cushion covering, the mat and center cushion covering together forming a center cushion;
a reclosable access opening;
a first side bolster hingedly attached to said center cushion covering;
a second side bolster hingedly attached to said center cushion covering; and
an end bolster hingedly attached to said center cushion covering, said side and end bolsters sufficiently moveable to form angles of between 0 degrees and 90 degrees relative to said center cushion.

10. The pad of claim 9 wherein said pet housings each have a floor and walls, and wherein said mat is sized to substantially cover said floor and said bolsters are sized to extend at least partly up said walls.

11. A pet pad comprising:
a center cushion;
at least one bolster flexibly attached to said center cushion.

12. The pad of claim 11 wherein said center cushion includes:
a center cushion covering and a removable mat within the center cushion covering.

13. The pad of claim 12 wherein the center cushion further includes a reclosable access opening.

14. The pad of claim 13 wherein the center cushion further includes a zipper to control the reclosable access opening.

15. A pet pad comprising:
a center cushion covering;
a removable mat disposed within the center cushion covering;
a first side bolster flexibly attached to said center pad covering;
a second side bolster flexibly attached to said center pad covering; and
an end bolster flexibly attached to said center pad covering.

16. The pad of claim 15 wherein the center cushion covering further includes a reclosable access opening.

17. The pad of claim 16 wherein the center cushion covering further includes a zipper to control said reclosable access opening.

18. The pad of claim 15 wherein each of said bolsters flex independently of the other bolsters.

19. A pet pad comprising:
a center cushion covering;
a removable mat disposed within the center cushion covering, the mat and center cushion covering together forming a center cushion;
a reclosable access opening;
a first side bolster hingedly attached to said center cushion covering;
a second side bolster hingedly attached to said center cushion covering; and
an end bolster hingedly attached to said center cushion covering, said side and end bolsters sufficiently moveable to form angles of between 0 degrees and 90 degrees relative to said center cushion.

20. The pad of claim 19 for use within a housing having a floor and at least one wall, wherein said mat is sized to substantially cover the floor and said bolsters are sized to extend at least partly up the at least one wall.
